# EUROPÄISCHE PATENTSCHRIFT

(11) **EP 3 727 832 B1**
(45) Veröffentlichungstag und Bekanntmachung des Hinweises auf die Patenterteilung: **09.02.2022**
(21) Anmeldenummer: 18812206.3
(22) Anmeldetag: 11.12.2018
(51) Int. Cl.: B32B 3/12, B32B 5/02, B32B 7/12, B32B 5/26, B32B 15/14, B32B 27/12, B32B 27/30, B32B 27/34, B32B 27/36, B32B 27/42, B32B 27/28, B32B 29/02, B32B 3/26, B32B 5/14, B29C 70/34, B29D 99/00, B29C 70/08

(54) **VERFAHREN ZUR HERSTELLUNG VON POLYURETHAN-SANDWICH-FORMTEILEN**
PROCESS FOR MANUFACTURING POLYURETHANE SANDWICH MOLDED PARTS
PROCÉDÉ DE FABRICATION DE PIÈCES MOULÉES EN POLYURÉTHANE SANDWICH

(30) Priorität: 21.12.2017 EP 17209234
(43) Veröffentlichungstag der Anmeldung: 28.10.2020
(73) Patentinhaber: BASF SE, 67056 Ludwigshafen am Rhein (DE)
(72) Erfinder: PARTUSCH, Georg, 49448 Lemfoerde (DE); SCHNEIDER, Juergen, 49448 Lemfoerde (DE); WESTERMANN, Gerd, 49448 Lemfoerde (DE); SCHMUTZER, Klaus, 49448 Lemfoerde (DE)
(74) Vertreter: BASF IP Association
(86) Internationale Anmeldenummer: PCT/EP2018/084328
(87) Internationale Veröffentlichungsnummer: WO 2019/121156

(56) Entgegenhaltungen:
- EP-A1- 0 251 267
- EP-A1- 2 438 102
- EP-A1- 2 597 107
- EP-A2- 2 257 580
- WO-A1-2008/113751

## Beschreibung

Die vorliegende Erfindung betrifft ein Verfahren zur Herstellung von Polyurethan-Sandwich-Formteilen, enthaltend mindestens eine Kernschicht und mindestens eine Verstärkungsfaserschicht, wobei man (i) mindestens eine Verstärkungsfaserschicht auf eine Kernschicht aufbringt und einen feuchtigkeitshärtenden Polyurethanklebstoff auf eine Verstärkungsfaserschicht aufträgt, (ii) das Teil aus (i) in eine Form gibt und in der Form verpresst und den feuchtigkeitshärtenden Polyurethanklebstoff aushärtet und (iii) das Formteil aus (ii) aus der Form entnimmt und gegebenenfalls nacharbeitet, wobei der feuchtigkeitshärtende Polyurethanklebstoff vor oder nach dem Aufbringen der Verstärkungsfaserschicht auf die mindestens eine Kernschicht aufgebracht wird und der feuchtigkeitshärtende Polyurethanklebstoff zum Aushärten mit Wasser oder mit einer Wasser enthaltenden Lösung in Kontakt gebracht wird. Weiter betrifft die vorliegende Erfindung ein Polyurethan-Sandwich-Formteil, erhältlich nach einem solchen Verfahren und die Verwendung eines Polyurethan-Sandwich-Formteils in Fahrzeugen.

Polyurethan-Sandwichteile sind seit langem bekannt. Diese werden hergestellt, in dem eine Kernschicht mit einer Verstärkungsschicht bedeckt wird. Auf dieses so genannte Sandwich-Halbzeug wird eine Polyurethanreaktionsmischung einseitig, vielfach auch zweiseitig aufgesprüht. Anschließend wird das mit der Polyurethanreaktionsmischung bedeckte Teil, das Roh-Sandwichteil, in eine Form gegeben, worin dem Sandwich-Halbzeug in einem thermischen Pressverfahren durch Verpressen eine bestimmte Form gegeben wird und die Polyurethanreaktionsmischung zum Polyurethan ausgehärtet wird. Dabei wird bei dem Verpressen die Verstärkungsschicht gestaucht. Die Stauchung kann dabei in einem weiten Bereich variiert werden und von wenigen zehntel Millimetern bis zu einer Stauchung auf wenige Prozent der Ausgangsdicke erfolgen. Dann wird das so erhaltene Polyurethan-Sandwichteil entformt. Dabei erfolgt die Gestaltung der Außenkontur über ein Abquetschen des Sandwichpakets im formgebenden Werkzeug.

Insbesondere im Bereich der Ränder solcher komprimierten Bereiche sowie an den Übergängen zu weniger komprimierten Bereichen kann die Kernschicht durch Polyurethan nur abgedichtet werden, wenn nach der Kompression noch ausreichend fließfähige Polyurethanreaktionsmischung vorhanden ist, um diese Bereiche abzudecken. Solche Verfahren sind beispielsweise in der Broschüre "PUR - Faserverbundwerkstoffe für den Leichtbau im Fahrzeuginnenraum der Bayer AG Leverkusen (Bestellnummer: PU 52248) oder "Baypreg F - PUR plus Natur im Automobil, Verbundwerkstoffe aus Polyurethan" der Bayer AG Leverkusen offenbart.

Nachteilig an diesem Verfahren ist, dass hohe Investitionen in Anlagen notwendig sind, da ein Aufsprühen von Polyurethanreaktionsmischung aus Sicherheitsaspekten die Installation einer effektiven Absaugeinrichtung zum Absaugen von Aerosolen erforderlich macht. Weiter führt das Auftragen von flüssigen Reaktionsmischungen auf ein Verstärkungselement oft zu Problemen mit dem Verlaufen und Abtropfen von Polyurethanmaterial vor dem Einlegen des Roh-Sandwichelements in eine Form. Lösungsansätze sind beispielsweise in WO 2008/113751 oder in EP 2257580 beschrieben, dennoch kann ein Verlaufen nicht vollständig verhindert werden. Aufgabe der vorliegenden Erfindung war es daher, ein alternatives Verfahren zur Herstellung von Polyurethan-Sandwich-Formteilen zu liefern, dass einfach durchzuführen ist und keine teuren Anlageninvestitionen notwendig macht. Weiter war es Aufgabe der vorliegenden Erfindung, ein Verlaufen des aufgetragenen Polyurethanmaterials zu verhindern und dennoch ausreichende Fließfähigkeit in der Form zu gewährleisten, damit eine saubere Kantenausbildung möglich ist.

Die erfindungsgemäße Aufgabe wird gelöst durch ein Verfahren zur Herstellung von Polyurethan-Sandwich-Formteilen, enthaltend mindestens eine Kernschicht und mindestens eine Verstärkungsfaserschicht, wobei man (i) mindestens eine Verstärkungsfaserschicht auf eine Kernschicht aufbringt und einen feuchtigkeitshärtenden Polyurethanklebstoff auf die Verstärkungsfaserschicht aufträgt, (ii) das Teil aus (i) in eine Form gibt und in der Form verpresst und den feuchtigkeitshärtenden Polyurethanklebstoff aushärtet und (iii) das Formteil aus (ii) aus der Form entnimmt und gegebenenfalls nacharbeitet, wobei der feuchtigkeitshärtende Polyurethanklebstoff vor oder nach dem Aufbringen der Verstärkungsfaserschicht auf die mindestens eine Kernschicht aufgebracht wird und der feuchtigkeitshärtende Polyurethanklebstoff zum Aushärten mit Wasser oder mit einer Wasser enthaltenden Lösung in Kontakt gebracht wird.

Unter einem feuchtigkeitshärtenden Polyurethanklebstoff wird im Rahmen der Erfindung eine Mischung, enthaltend ein Isocyanatgruppen aufweisendes Prepolymer, oder das Isocyanatgruppen aufweisendes Prepolymer selbst verstanden, wobei die Mischung mindestens 50 Gew.-%, vorzugsweise zu mindestens 80 Gew.-% und insbesondere zu mindestens 95 Gew.-% aus einem Isocyanatgruppen aufweisenden Prepolymer aufweist. Weiter kann ein erfindungsgemäßer feuchtigkeitshärtender Polyurethanklebstoff weitere Additive, wie oberflächenaktive Substanzen, wie Formtrennmittel und/oder Entschäumer, Inhibitoren, wie Diglycol-bis-chlorformiat oder ortho-Phosphorsäure, Weichmacher, anorganische Füllstoffe, wie Sand, Kaolin, Kreide, Bariumsulfat, Siliziumdioxid, Oxidationsstabilisatoren, Farbstoffe und Pigmente, Stabilisatoren, z.B. gegen Hydrolyse, Licht, Hitze oder Verfärbung, anorganische und / oder organische Füllstoffe, Emulgatoren, Flammschutzmittel, Alterungsschutzmittel und Haftvermittler sowie in der Polyurethanchemie gebräuchliche Katalysatoren enthalten. Dabei liegt die Viskosität des erfindungsgemäßen feuchtigkeitshärtenden Polyurethanklebstoffs in einem Bereich von 5.000 bis 50.000 mPas, besonders bevorzugt von 5.000 bis 30.000 weiter bevorzugt 6.000 bis 20.000 und insbesondere 7000 bis 15.000 mPas, gemessen bei 25 °C nach DIN 53 018. Als isocyanatgruppenhaltiges Prepolymer wird im Rahmen der Erfindung das Umsetzungsprodukt von Polyisocyanaten mit polymeren Verbindungen, die zumindest zwei gegenüber Isocyanaten reaktive Gruppen aufweisen, gegebenenfalls Verbindungen mit einer gegenüber Isocyanaten reaktiven Gruppe sowie gegebenenfalls Kettenverlängerungs- und / oder Vernetzungsmitteln verstanden, wobei das Polyisocyanat im Überschuss eingesetzt wird.

Als Polyisocyanate können für die Herstellung des isocyanatgruppenhaltiges Prepolymers alle aus dem Stand der Technik bekannten aliphatischen, cycloaliphatischen und aromatischen zwei- oder mehrwertigen Isocyanate sowie beliebige Mischungen daraus eingesetzt werden. Vorzugsweise werden aromatische zwei- oder mehrwertigen Isocyanate eingesetzt. Beispiele sind 4,4', 2,4' und 2,2'-Diphenylmethandiisocyanat (MDI), die Mischungen aus monomeren Diphenylmethandiisocyanaten und höherkernigen Homologen des Diphenylmethandiisocyanats (Polymer-MDI), Tetramethylendiisocyanat, Hexamethylendiisocyanat (HDI), Isophorondiisocyanat (IPDI), 1,5-Naphthalindiisocyanat (NDI), 2,4,6-Toluoltriisocyanat und 2,4- und 2,6-Toluoldiisocyanat (TDI), oder Mischungen daraus.

Besonders bevorzugt werden aromatische Isocyanate, vorzugsweise ausgewählt aus der Gruppe, bestehend aus 2,4-Toluoldiiisocyanat, 2,6-Toluoldiiisocyanat, 2,4'-Diphenylmethandiisocyanat und 4,4'-Diphenylmethandiisocyanat und höherkernige Homologe des Diphenylmethandiisocyanats (Polymer-MDI) sowie Gemische dieser Isocyanate eingesetzt. Insbesondere wird als Isocyanat ein aromatisches Isocyanat, ausgewählt aus der Gruppe, bestehend aus 2,4'-Diphenylmethandiisocyanat, 4,4'-Diphenylmethandiisocyanat, höherkernigen Homologen des Diphenylmethandiisocyanats oder Mischungen aus zwei oder mehreren dieser Verbindungen eingesetzt.

Als polymere gegenüber Isocyanaten reaktive Verbindungen mit zumindest zwei gegenüber Isocyanaten reaktiven Gruppen können für die Herstellung des isocyanatgruppenhaltigen Prepolymers alle Verbindungen mit zumindest zwei gegenüber Isocyanatgruppen reaktiven Gruppen eingesetzt werden. Diese weisen ein Molekulargewicht von mindestens 400 g/mol auf. Vorzugsweise werden eingesetzt Polyesterole, Polyetherole oder Polyether-Polyesterole, die beispielsweise durch Alkoxylierung von Polyestern erhalten werden können.

Polyetherole werden nach bekannten Verfahren, beispielsweise durch anionische Polymerisation mit Alkalihydroxiden oder Alkalialkoholaten als Katalysatoren und unter Zusatz mindestens eines Startermoleküls, das 2 bis 5, vorzugsweise 2 bis 4 und besonders bevorzugt 2 bis 3, insbesondere 2 reaktive Wasserstoffatome gebunden enthält, oder durch kationische Polymerisation mit Lewis-Säuren, wie Antimonpentachlorid oder Bortrifluorid-Etherat, aus einem oder mehreren Alkylenoxiden mit 2 bis 4 Kohlenstoffatomen im Alkylenrest hergestellt. Weiter können als Katalysatoren auch Multimetallcyanidverbindungen, sogenannte DMC-Katalysatoren, eingesetzt werden. Geeignete Alkylenoxide sind beispielsweise Tetrahydrofuran, 1,3-Propylenoxid, 1,2-bzw. 2,3-Butylenoxid und vorzugsweise Ethylenoxid und 1,2-Propylenoxid. Die Alkylenoxide können einzeln, alternierend nacheinander oder als Mischungen verwendet werden. Bevorzugt werden 1,2-Propylenoxid, Ethylenoxid oder Mischungen aus 1,2-Propylenoxid und Ethylenoxid verwendet.

Als Startermolekül kommen vorzugsweise Wasser oder 2- und 3-wertige Alkohole in Betracht, wie Ethylenglykol, 1,2- oder 1,3-Propandiol, Diethylenglykol, Dipropylenglykol, 1,4-Butandiol, Glycerin und Trimethylolpropan.

Die bevorzugten Polyetherpolyole, besonders bevorzugt Polyoxypropylen- oder Polyoxypropylen-polyoxyethylen-polyole, sind erhältlich durch Alkoxylierung eines Startermoleküls mit einer Funktionalität von 2 bis 4, besonders bevorzugt 2 und 3 weisen einen mittleren Gehalt an Ethylenoxid, bezogen auf das Gesamtgewicht an Alkylenoxid, von 20 bis 70 Gew.-%, vorzugsweise 25 bis 60 Gew.-% und insbesondere 30 bis 50 Gew.-%. Die bevorzugten Polyetherole besitzen ein zahlengemitteltes Molekulargewicht von 400 bis 9.000 g/mol, vorzugsweise 1.000 bis 6.000, besonders bevorzugt 1.500 bis 5.000 und insbesondere von 2.000 bis 4.000 g/mol. Dabei führt üblicherweise eine Erhöhung des Gehalts an Ethylenoxid sowie die Verringerung der Funktionalität bei gleichem Molekulargewicht zu einer Verringerung der Viskosität der Polyetherole.

Weiter können als polymere, gegenüber Isocyanat reaktive Verbindungen hydrophobe Polyole eingesetzt werden. Dabei wird als hydrophobes Polyol vorzugsweise eine hydroxylfunktionalisierte fettchemische Verbindung, ein fettchemisches Polyol, eingesetzt. Es sind eine Reihe von hydroxylfunktionellen fettchemischen Verbindungen bekannt, die verwendet werden können. Beispiele sind Rizinusöl, mit Hydroxylgruppen modifizierte Öle wie Traubenkernöl, Schwarzkümmelöl, Kürbiskernöl, Borretschsamenöl, Sojaöl, Weizenkeimöl, Rapsöl, Sonnenblumenöl, Erdnussöl, Aprikosenkernöl, Pistazienkernöl, Mandelöl, Olivenöl, Macadamianussöl, Avocadoöl, Sanddornöl, Sesamöl, Haselnussöl, Nachtkerzenöl, Wildrosenöl, Hanföl, Distelöl, Walnussöl, mit Hydroxylgruppen modifizierte Fettsäureester auf Basis von Myristoleinsäure, Palmitoleinsäure, Ölsäure, Vaccensäure, Petroselinsäure, Gadoleinsäure, Erucasäure, Nervonsäure, Linolsäure, Linolensäure, Stearidonsäure, Arachidonsäure, Timnodonsäure, Clupanodonsäure, Cervonsäure. Bevorzugt eingesetzt werden hierbei das Rizinusöl und dessen Umsetzungsprodukte mit Alkylenoxiden oder Keton-Formaldehyd-Harzen. Letztgenannte Verbindungen werden beispielsweise von der Bayer AG unter der Bezeichnung Desmophen^{®} 1150 vertrieben. In einer besonders bevorzugten Ausführungsform enthalten die polymeren, gegenüber Isocyanaten reaktive Verbindungen mit zumindest zwei gegenüber Isocyanaten reaktiven Gruppen hydrophobe Polyether- oder Polyesterole.

Neben den Polymeren Verbindungen mit zumindest zwei gegenüber Isocyanatgruppen reaktiven Gruppen können auch Verbindungen mit nur einer gegenüber Isocyanaten reaktiven Gruppe eingesetzt werden. Dabei handelt es sich vorzugsweise Polyethermonoole, die ausgehend von monofunktionellen Startermolekülen, beispielsweise Ethylenglycolmonomethylether, analog zu den oben beschriebenen Polyetherolen erhalten werden. Dabei beträgt das Molekulargewicht der Polyethermonoole vorzugsweise 100 bis 1000 g/mol. Wenn Polyethermonoole eingesetzt werden, beträgt das Gewichtsverhältnis von Polyethermonool zu Polyetherpolyol vorzugsweise 1:30 bis 4:1, vorzugsweise werden keine Verbindungen mit nur einer gegenüber Isocyanaten reaktiven Gruppe eingesetzt.

Gegebenenfalls können zur Herstellung des isocyanatgruppenhaltigen Prepolymers auch Kettenverlängerungs- und / oder Vernetzungsmittel eingesetzt werden. Die Zugabe der Kettenverlängerungs- und / oder Vernetzungsmittel kann vor, zusammen mit oder nach der Zugabe der Polyole erfolgen. Als Kettenverlängerungsmittel und / oder Vernetzungsmittel werden Substanzen mit einem Molekulargewicht von vorzugsweise kleiner 400 g/mol, besonders bevorzugt von 60 bis 350 g/mol eingesetzt, wobei Kettenverlängerer 2 gegenüber Isocyanaten reaktive Wasserstoffatome und Vernetzungsmittel 3 gegenüber Isocyanat reaktive Wasserstoffatome aufweisen. Diese können einzeln oder in Form von Mischungen eingesetzt werden. Werden Kettenverlängerer eingesetzt, sind 1,3- und 1,2-Propandiol, Dipropylenglycol, Tripropylenglycol 1,3 Butandiol besonders bevorzugt.

Sofern Kettenverlängerungsmittel, Vernetzungsmittel oder Mischungen davon Anwendung finden, kommen diese zweckmäßigerweise in Mengen von 1 bis 30 Gew.-%, vorzugsweise 1,5 bis 20 Gew.-% und insbesondere 2 bis 10 Gew.-%, bezogen auf das Gewicht von Polyisocyanaten, gegenüber polymeren gegenüber Isocyanat reaktiven Verbindungen und Kettenverlängerungsmitteln und / oder Vernetzungsmitteln zum Einsatz, vorzugsweise werden keine Kettenverlängerer und/oder Vernetzungsmittel eingesetzt.

Gegebenenfalls können zur Herstellung des isocyanatgruppenhaltigen Prepolymers auch übliche Polyurethankatalysatoren, vorzugsweise aminhaltige Polyurethankatalysatoren eingesetzt werden. Solche Katalysatoren werden beispielsweise im "Kunststoffhandbuch, Band 7, Polyurethane", Carl Hanser Verlag, 3. Auflage 1993, Kapitel 3.4.1 beschrieben. Vorzugsweise enthalten die Katalysatoren stark basische Aminkatalysatoren. Beispiele hierfür sind Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-,N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin. Die Katalysatoren können einzeln oder als Mischungen verwendet werden. Vorzugsweise werden keine Katalysatoren zur Herstellung des isocyanatgruppenhaltigen Prepolymers eingesetzt.

Zur Herstellung des isocyanatgruppenhaltigen Prepolymers werden die beschriebene Polyisocyanate im Überschuss, beispielsweise bei Temperaturen von 30 bis 100 °C, bevorzugt bei etwa 80 °C, mit den polymeren Verbindungen mit mindestens zwei gegenüber Isocyanaten reaktiven Gruppen, gegebenenfalls Verbindungen mit einer gegenüber Isocyanaten reaktiven Gruppe sowie gegebenenfalls Kettenverlängerungs- und / oder Vernetzungsmittel zum Prepolymer umgesetzt. Dabei werden Polyisocyanat, polymeren Verbindungen mit mindestens zwei gegenüber Isocyanaten reaktiven Gruppen, gegebenenfalls Verbindungen mit einer gegenüber Isocyanaten reaktiven Gruppe sowie gegebenenfalls Kettenverlängerungs- und / oder Vernetzungsmittel vorzugsweise in einem Verhältnis von Isocyanatgruppen zu gegenüber Isocyanaten reaktiven Gruppen von 1.5 : 1 bis 15 : 1, vorzugsweise 1,8 : 1 bis 8 : 1 miteinander vermischt. Besonders bevorzugt werden zur Herstellung der Prepolymere Polyisocyanate polymeren Verbindungen mit mindestens zwei gegenüber Isocyanaten reaktiven Gruppen, gegebenenfalls Verbindungen mit einer gegenüber Isocyanaten reaktiven Gruppe sowie gegebenenfalls Kettenverlängerungs- und / oder Vernetzungsmittel in einem Verhältnis miteinander vermischt, dass der NCO-Gehalt des hergestellten Prepolymers vorzugsweise im Bereich von 5 bis 20, insbesondere von 7 bis 15 Gew.-%, bezogen auf das Gesamtgewicht des hergestellten Isocyanatprepolymers, liegt. Anschließend können vorzugsweise flüchtige Isocyanate abgetrennt werden, vorzugsweise durch Dünnschichtdestillation. Dabei liegt die Viskosität der erfindungsgemäßen Isocyanatprepolymere bei 5.000 bis 50.000 mPas, bevorzugt bei 5000 bis 30.000 mPas und insbesondere bei 5.000 bis 15.000 mPas, jeweils bei 25 °C. Diese kann beispielsweise durch die Einstellung des Isocyanatindex, der mittleren Funktionalität sowie der eingesetzten Polyole und Isocyanate eingestellt werden. Diese Modifikationen sind dem Fachmann bekannt. Die Mittlere Isocyanatfunktionalität der Isocyanatprepolymere beträgt vorzugsweise 2,0 bis 2,9, besonders bevorzugt 2,1 bis 2,6.

Der feuchtigkeitshärtende Polyurethanklebstoff kann auch Katalysatoren für die Polyurethanreaktion enthalten. Diese umfassen beispielsweise Amidine, wie 2,3-Dimethyl-3,4,5,6-tetrahydro-pyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-bu-tandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin verwendet. Ebenso kommen als Katalysatoren organische Metallverbindungen in Betracht, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat, sowie Bismutcarboxylate, wie Bismut(III)-neodecanoat, Bismut-2-etyhlhexanoat und Bismut-octanoat oder Mischungen davon. Die organischen Metallverbindungen können allein oder in Kombination mit basischen Aminen eingesetzt werden.

In einer bevorzugten Ausführungsform enthält der feuchtigkeitshärtende Polyurethanklebstoff der vorliegenden Erfindung als Katalysator einen thermisch aktivierbaren Katalysator dessen Aktivierungstemperatur oberhalb der Temperatur des Walzenaufrags des Prepoylmers liegt. Geeignete Katalysatoren sind beispielsweise in EP2257580 beschrieben und umfassen Carbonsäuresalze von zur Polyurethanherstellung üblichen Aminkatalysatoren. Dabei werden die Carbonsäuresalze der basischen Aminkatalysatoren erhalten, indem die Aminkatalysatoren mit Carbonsäuren gemischt werden. Dies kann in einem separaten Schritt, gegebenenfalls unter Verwendung eines Lösungsmittels, oder durch Zugabe der Säure und des basischen Aminkatalysators zu einem der Ausgangsstoffe zur Herstellung des Isocyanatgruppen aufweisenden Prepolymers erfolgen.

Vorzugsweise wird das Carbonsäuresalz des Aminkatalysators erhalten, in dem in einem separaten Schritt Carbonsäure und basischer Aminkatalysator, gegebenenfalls unter Erwärmen, gemischt werden. Vorzugsweise wird dabei ein Alkohol, besonders bevorzugt ein zwei- oder dreiwertiger Alkohol mit einem Molekulargewicht von kleiner 120 g/mol, insbesondere Ethylenglycol, als Lösungsmittel verwendet. Das so gebildete Carbonsäuresalz eines Aminkatalysators kann dann in einem weiteren Schritt mit dem isocyanatgruppenhaltigen Prepolymer vermischt werden.

Basische Aminkatalysatoren werden beispielsweise im "Kunststoffhandbuch, Band 7, Polyurethane", Carl Hanser Verlag, 3. Auflage 1993, Kapitel 3.4.1 beschrieben. Beispiele hierfür sind Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-,N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, N,N-bis(3-Dimethylaminopropyl)-N-isopropanolamin, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin, N,N-bis(3-Dimethylaminopropyl)-N-isopropanolamin und Dimethylethanolamin. Insbesondere werden dabei basische Aminkatalysatoren eingesetzt, die mindestens eine, bevorzugt genau eine, gegenüber Isocyanaten reaktive Gruppe aufweist, wie N,N-bis(3-Dimethylaminopropyl)-N-isopropanolamin. Die Katalysatoren können einzeln oder als Mischungen verwendet werden.

Als Carbonsäuren werden vorzugsweise solche eingesetzt, die ein Molekulargewicht von kleiner 300 g/mol aufweisen. Besonders bevorzugt werden dabei gesättigte und ungesättigte aliphatische Monocarbonsäuren mit 1 bis 18 Kohlenstoffatomen, wie Ameisensäure, Essigsäure, Cyanessigsäure oder 2-Ethylhexansäure, aromatische Carbonsäuren, aliphatische, gesättigte und ungesättigte Dicarbonsäuren mit 2 bis 16 Kohlenstoffatomen, oder Tricarbonsäuren oder Mischungen daraus eingesetzt. Auch können Derivate der oben genannten Carbonsäuren verwendet werden. Weiter bevorzugt werden als Carbonsäuren Dicarbonsäuren der allgemeinen Formel HOOC-(CH₂)ₙ-COOH eingesetzt, wobei n für eine ganze Zahl von 2 bis 14 steht. Solche Dicarbonsäuren sind im Allgemeinen weniger korrosiv. Insbesondere wird als Carbonsäure Adipinsäure verwendet.

Das Verhältnis aus Säure und Aminkatalysator wird dabei so gewählt, dass bezogen auf ein Äquivalent Amin des Aminkatalysators, 0,5 bis 1,5, bevorzugt 0,7 bis 1,3, besonders bevorzugt 0,90 bis 1,10 und insbesondere 0,95 bis 1,05 Äquivalente Säuregruppen einer Carbonsäure enthalten sind.

Die Carbonsäuresalze eines Aminkatalysators (c) können beispielsweise in einer Konzentration von 0,001 bis 10 Gew.-%, bevorzugt 0,05 bis 5 Gew.-% und besonders bevorzugt 0,05 bis 2 Gew.-%, bezogen auf das Gesamtgewicht des Isocyanatgruppen aufweisenden Prepolymers eingesetzt werden.

Vorzugsweise werden weniger als 2 Gew.-%, besonders bevorzugt weniger als 1 Gew.-% und insbesondere kein Katalysator bzw. Katalysatorkombination, bezogen auf das Gewicht des Isocyanatgruppen aufweisenden Prepolymers zugegeben.

Weiter kann der feuchtigkeitshärtende Polyurethanklebstoff übliche Zusatzstoffe, wie Farbstoffe, Pigmente, Füllstoffe, Formtrennmittel, Entschäumer oder andere Prozesshilfsmittel enthalten. Diese Zusatzstoffe sind für Polyurethanklebstoffe allgemein bekannt. Vorzugsweise sind keine Formtrennmittel enthalten.

Erfindungsgemäß kann in einem ersten Schritt der feuchtigkeitshärtenden Polyurethanklebstoff auf eine Verstärkungsfaserschicht aufgetragen werden. Dabei kann die Auftragung einseitig oder auf beiden Seiten erfolgen. Anschließend wird die Polyurethanklebstoff enthaltende Verstärkungsfaserschicht auf die Kernschicht aufgetragen. Die so mit Polyurethanklebstoff imprägnierte Verstärkungsfaserschicht kann gegebenenfalls zugeschnitten und direkt auf die Kernschicht aufgebracht werden. Alternativ wird die imprägierte Verstärkungsfaserschicht nicht direkt auf die Verstärkungsfaserschicht aufgebracht. Die Auftragung der imprägnierten Verstärkungsfaserschicht auf die Kernschicht kann eine Stunde bis 3 Monate, vorzugsweise einen Tag bis 4 Wochen und insbesondere 2 Tage bis 2 Wochen nach dem Auftragen des Polyurethanklebstoffs auf die Verstärkungsfaserschicht erfolgen. In dieser Zeit kann die imprägnierte Verstärkungsfaserschicht beispielsweise zugeschnitten und aufgeschichtet oder in Bahnenform auf Rollen aufgewickelt werden, wobei der Kontakt der imprägnierten Lagen falls notwendig vermieden wird, beispielsweise durch Einsatz eines Trennpapiers.

Die imprägnierte Verstärkungsfaserschicht kann auch ohne Verwendung einer Kernschicht in einer Form ausgehärtet werden. Gegebenenfalls kann eine oder beide Seiten der Kernschicht, beispielsweise während des Formgebungsprozess, mit einem thermoplastischen Material beschichtet werden.

Alternativ kann auch zuerst die Verstärkungsfaserschicht einseitig oder beidseitig auf die Kernschicht aufgelegt werden und anschließend der Polyurethanklebstoff auf die der Kernschicht abgewandte Seite der Verstärkungsfaserschicht aufgebracht werden. Vorzugsweise erfolgt zuerst die Auftragung des Polyurethanklebstoffs auf die Verstärkungsfaserschicht und anschließend der Auftrag der Polyurethanklebstoff enthaltenden Verstärkungsfaserschicht auf die Kernschicht.

Als Material für die Kernschicht werden dabei bevorzugt thermoformbare Polyurethan-Schaumstoffe sowie Papier-, Metall-, oder Kunststoffwaben, eingesetzt. Als Verstärkungsfaserschicht können vorzugsweise Glasfasermatten, Glaserfaservliese, Glasfaserwirrlagen, Glasfasergewebe, geschnittene oder gemahlene Glas- oder Mineral-Fasern, Naturfasermatten und -gewirke, geschnittene Naturfasern und Fasermatten, -vliese und -gewirke auf Basis von Polymer-, Kohlenstoff- bzw. Aramidfasern sowie deren Mischungen eingesetzt werde, besonders bevorzugt werden als Verstärkungsfaserschicht Glasfaserschichten oder Kohlefaserschichten eingesetzt. Dabei kann die Verstärkungsfaserschicht auf eine Seite der Kernschicht und bevorzugt auf beiden Seiten der Kernschicht aufgebracht werden.

Das Aufbringen der erfindungsgemäßen Polyurethanklebstoffe auf die Verstärkungsfaserschicht kann durch übliche Verfahren, wie Aufsprühen, Rakeln, oder die Walzenauftragung erfolgen, wobei die Walzenauftragung, beispielsweise unter Einsatz einer Dosierwalze und einer Auftragswalze bevorzugt ist. Diese Auftragstechniken sind dem Fachmann bekannt und beispielsweise beschrieben in Artur Goldschmidt, Hans-Joachim Streitberger, BASF Handbook on Basics of Coating Technology, 2003. Das Auftragen kann bei üblichen Temperaturen, beispielsweise 10° bis 100 °C, vorzugsweise bei erhöhten Temperaturen von 30° bis 90° und insbesondere 50° bis 85°C erfolgen. Die Auftragsmenge kann in üblichen Bereichen variieren und liegt vorzugsweise in einem Bereich von 150 g/m² bis 5000 g/m², besonders bevorzugt von 200 bis 2000 g/m² mehr bevorzugt 400 bis 1000 g/m² und insbesondere 500 bis 800 g/m². Wenn der Polyurethanklebstoff auf die Verstärkungsfaserschicht aufgebracht wird bevor diese auf die Kernschicht aufgebracht wird, erfolgt die Auftragung des Polyurethanklebstoffs auf die Verstärkungsfaserschicht vorzugsweise auf beiden Seiten der Verstärkungsfaserschicht, wobei sich die genannten Mengen zu gleichen oder unterschiedlichen Teilen auf die beiden Seiten der Verstärkungsfasersicht aufteilen. Eine Ausführungsform des Walzenauftrags ist in Figur 1 gezeigt.

Damit wird ein Roh-Sandwichelement erhalten, das mindestens eine Kernschicht und mindestens eine, den feuchtigkeitshärtenden Polyurethanklebstoff enthaltende Verstärkungsfaserlage aufweist.

Damit eine Aushärtung des feuchtigkeitshärtenden Polyurethanklebstoffs erfolgen kann, muss dieser mit Wasser oder mit einer Wasser enthaltenden Lösung in Kontakt gebracht werden. Dies kann beispielsweise durch Bedampfen während des Formgebungsprozesses oder durch Auftragen von Wasser oder einer wässrigen Lösung, beispielsweise durch Aufsprühen, vor dem Formgebungsprozess erfolgen. Vorzugsweise wird vor dem Formgebungsprozess (ii) das Roh-Sandwichelement mit Wasser oder einer wässrigen Lösung besprüht. Alternativ kann die Polyurethanklebstoff enthaltene Verstärkungsfaserschicht in einer weniger bevorzugten Ausführungsform auch vor dem Aufbringen auf die Kernschicht, beispielsweise unmittelbar vor dem Aufbringen auf die Kernschicht mit Wasser oder der wässrigen Lösung besprüht werden. In einer weiteren Alternative kann Wasser bereits in der Kernschicht oder in der Verstärkungsfaserschicht enthalten sein. Dieses kann beispielsweise durch die Wärmezufuhr beim Formgebungsprozess verdampfen und so dem feuchtigkeitshärtenden Polyurethanklebstoff zum Aushärten zugänglich gemacht werden.

In einer besonders bevorzugten Ausführungsform wird dazu eine wässrige, alkalische Lösung eingesetzt. Diese weist vorzugsweise einen pH-Wert von mindestens 10, vorzugsweise von mindestens 11, besonders bevorzugt von mindestens 12, weiter bevorzugt mindestens 13 und insbesondere mindestens 13,5 auf. Dabei ist der maximale pH-Wert nicht beschränkt. Aus verfahrenstechnischen Gründen beträgt die OH⁻ -Konzentration aber vorzugsweise nicht mehr als 10 mol/L, besonders bevorzugt nicht mehr als 5 mol/L, weiter bevorzugt nicht mehr als 3 mol/L und insbesondere nicht mehr als 2 mol/L. Besonders bevorzugt enthält die wässrige, alkalische Lösung eine Alkalimetall-Lösung, wie eine Alkalimetall-Silikat-, Alkalimetall Carbonat- oder Alkalimetall-Hydroxydlösung.

Vorzugsweise weist die alkalische, wässrige Alkalimetall-Lösung eine Alkalimetallkonzentration von 0,1 bis 10 mol auf. Insbesondere sind in der Lösung die Alkalimetallionen Lithium-, Natrium- oder Kaliumionen sowie Mischungen enthaltend mindestens zwei von Lithium-, Natrium- und Kaliumionen bevorzugt. Bevorzugte Mischungen enthaltend Natrium- und Kaliumionen. Dabei kann die alkalische, wässrige Alkalimetall-Lösung beispielsweise durch Lösen von Alkalimetallverbindungen mit schwachen Säuren oder und/oder Akalimetallhydroxyden sowie durch direkte Reaktion von Alkalimetall mit Wasser erhalten werden. Als schwache Säuren werden dabei Verbindungen mit einem pKs-Wert für die Deprotonierung des letzten Wasserstoffatoms von mindestens 8, bevorzugt mindestens 9 und insbesondere mindestens 10 verstanden. Ein Beispiel für mögliche Alkalimetallverbindung mit einer schwachen Säure sind Alkalimetallsalze der Isocyansäure, Alkalimetallsulfide, Alkalimetallphosphate und Alkalimetallcarbonate, vorzugsweise Alkalimetallcarbonate. Insbesondere werden Alkalimetallhydroxyde und/oder Alkalimetallcarbonate eingesetzt.

Typischerweise liegt das Gewichtsverhältnis von alkalischer, wässriger Alkalimetall-Lösung und feuchtigkeitshärtendem Polyurethanklebstoff zwischen 2 : 1 und 1 : 10, vorzugsweise zwischen 1 : 1 und 1 : 5. Dies entspricht einem Auftrag von 10 bis 150 und vorzugsweise 80 bis 120 g pro m² Verstärkungsfaserschicht.

Anschließend wird das Roh-Sandwichteil in eine Form gegeben und die Polyurethanreaktionsmischung wird ausgehärtet. Vorzugsweise beträgt die Formtemperatur 60 bis 180 °C, besonders bevorzugt 80 bis 150°C und besonders bevorzugt 90 bis 140 °C.

Gegebenenfalls werden die Roh-Sandwichelemente zusammen mit einer Deckschicht oder einer Dekorschicht verpresst. Dabei kann die Deckschicht bzw. die Dekorschicht auf einer oder auf beiden Seiten des Polyurethan-Sandwichteils aufgebracht bzw. in die Form eingelegt werden. Alternativ kann die Deckschicht bzw. die Dekorschicht nach dem Entformen des Polyurethan-Sandwichteils in einem weiteren Arbeitsschritt aufgebracht werden.

Beim Verpressen wird die Kernschicht zumindest regional gestaucht. Die Stauchung kann dabei in einem weiten Bereich variiert werden und von wenigen zehntel Millimetern bis zu einer Stauchung auf weniger als 10 % der Ausgangsdicke der Kernschicht erfolgen. Vorzugsweise wird beim Verpressen des Roh-Sandwichteils die Kernschicht in verschiedenen Bereichen unterschiedlich stark gestaucht.

Als Dekorschicht können hierbei gegen eine Durchtränkung mit Polyurethan gesperrte Textilstoffe, kompakte oder geschäumte Kunststofffolien sowie Sprüh- oder RIM-Häute aus Polyurethan verwendet werden. Als Deckschichten können auch für Außenanwendungen geeignete, vorgeformte Materialien wie Metallfolien oder - bleche sowie kompakte thermoplastische Kunststoff-Composites aus PMMA (Polymethylmethacrylat), ASA (Acrylester modifiziertes Styrol-Acrylnitril-Terpolymer), PC (Polycarbonat), PA (Polyamid), PBT (Polybutylenterephtalat) und/oder PPO (Polyphenylenoxid) in lackierter, lackierfähig eingestellter oder eingefärbter Form verwendet werden. Als Deckschichten können ebenfalls kontinuierlich oder diskontinuierlich hergestellte Deckschichten auf Basis von Polyurethan-, Melamin-Phenol-, Phenol-Formaldehyd-, Epoxy- oder ungesättigten Polyester-Harzen verwendet werden.

Die nach einem erfindungsgemäßen Verfahren hergestellten Polyurethan-Sandwichteile können beispielsweise als Strukturbauteile oder Verkleidungsteile, insbesondere in der Autoindustrie, der Möbelindustrie oder der Bauindustrie eingesetzt werden.

Gegebenenfalls werden die Roh-Sandwichteile beim Verpressen über sogenannte Tauch- oder Pinchkanten getrimmt, so dass hier keine weitere Nachbearbeitung, wie Stanzen oder Fräsen mehr notwendig ist.

Ein Vorteil des erfindungsgemäßen Verfahrens ist, dass das Polyurethan effizienter eingesetzt werden kann und eine gleichbleibende Versteifung der Sandwichelemente im Vergleich zu Sprühverfahren des Stands der Technik mit einer geringeren Menge an Polyurethan erreicht werden kann. Weiter werden in einem erfindungsgemäßen Verfahren keine Substanzen eingesetzt, die zur Emission von flüchtigen Komponenten und damit zu Geruchsbildung führen. So können die erfindungsgemäßen Polyurethan-Sandwich-Formteile in geschlossenen Räumen, beispielsweise im Innern von Fahrzeugen, wie Automobilen, eingesetzt werden ohne dass dies zu einer Geruchsbelästigung führt. Weiter tritt bei der Herstellung im Gegensatz zum Sprühverfahren keine Aerosolbildung auf, wodurch keine Absaugvorrichtung erforderlich ist. Durch gezieltere Auftragung entsteht darüber hinaus weniger nicht-sortenreiner Abfall. Überraschenderweise treten auch an Übergangsstellen zwischen unterschiedlich stark gestauchten Bereichen keine Fehler der Oberfläche des Formteils auf. Auch an den Rändern ist der Polyurethanklebstoff im Formgebungsprozess noch so fließfähig, dass keine offenen Kanten oder Ecken entstehen.

Im Folgenden soll die Erfindung anhand von Beispielen verdeutlicht werden.

### Bsp.1:

Herstellung eines Polyurethanklebstofffs:
378 g einer Mischung aus 2,4-MDI, 4,4'-MDI und höherkernigen Homologen des MDI mit einer mittleren Isocyanatfunktionalität von 2,7 wird bei Raumtemperatur vorgelegt und nach und nach mit 420 g eines Polyols auf Basis von Propylenglycol als Starter und Polyethylenoxid-Polypropylenoxid mit einem Ethylenoxidgehalt von ca. 20 %, bezogen auf den Gehalt an Ethylenoxid und Propylenoxid, und einer Hydroxylzahl von 29,5 mg KOH/g und 200 g eines Polyols auf Basis von Glycerin als Starter und Polypropylenoxid-Polyethylenoxid mit einem Ethylenoxidgehalt von ca. 70 %, bezogen auf den Gehalt an Ethylenoxid und Propylenoxid, und einer Hydroxylzahl von 42 mg KOH/g vermischt. Anschließend wird die Mischung auf 60 °C erwärmt und 2 Stunden bei 60 °C gerührt, danach auf unter 40 °C abgekühlt. Nach dem Abkühlen wurde das Isocyanatprepolymer noch mit 0,5 g Diglycol-bis-chlorformiat und 0,5 g 85% ige Ortho-Phosphorsäure versetzt.

Das erhaltene Polyurethanprepolymer weist eine Viskosität bei 25 °C von 19150 mPas und einen NCO-Gehalt von 9,9 Gew.-% auf.

Herstellung eines Sandwichbauteils:
Es wurde ein Preform hergestellt aus einer Pappwabe mit einer Dicke von ca. 18 mm, die auf beiden Seiten mit Fasergewebe Unifilo^{®} 450 der Firma Owens Corning umhüllt wurde. Der erhaltene Polyurethanklebstoff wurde im Walzenauftragsverfahren bei einer Walzentemperatur von 75 °C in einer Menge von jeweils 330 g/m² jeweils auf die Ober- und Unterseite des Preform-Sandwich aufgetragen. Die Oberfläche des Roh-Sandwichteils wurde dann mit ca. 100 g/m² einer 10 Gew.-%-iger Natriumcarbonatlösung besprüht. Das Roh-Sandwichelement wurde anschließend in einer Form mit einer Formtemperatur von 120 °C auf eine Dicke 1 von 11 mm und eine Dicke 2 von 2 mm verpresst und nach 90 Sekunden entformt.

### Bsp.2

519 g einer Mischung aus 2,4-MDI, 4,4'-MDI und höherkernigen Homologen des MDI mit einer mittleren Isocyanatfunktionalität von 2,7 wird bei Raumtemperatur vorgelegt und nach und nach mit 325 g eines Propylenglycol gestarteten Polyethylenoxid-Polypropylenoxids mit einem Ethylenoxidgehalt von ca. 20 %, bezogen auf den Gehalt an Ethylenoxid und Propylenoxid, und einer Hydroxylzahl von 29,5 mg KOH/g und 155 g eines Glyceringestarteten Polypropylenoxid-Polyethylenoxids mit einem Ethylenoxidgehalt von ca. 70 %, bezogen auf den Gehalt an Ethylenoxid und Propylenoxid, und einer Hydroxylzahl von 42 mg KOH/g vermischt. Anschließend wird die Mischung auf 60 °C erwärmt und 2 Stunden bei 60 °C gerührt, danach auf unter 40 °C abgekühlt. Nach dem Abkühlen wurde das Isocyanatprepolymer noch mit 0,5 g Diglycol-bis-chlorformiat und 0,5 g 85% ige Ortho-Phosphorsäure versetzt.

Das erhaltene Polyurethanprepolymer weist eine Viskosität bei 25 °C von 8250 mPas und einen NCO-Gehalt von 14,4 Gew.-% auf.

Es wurde ein Preform hergestellt aus einer Pappwabe mit einer Dicke von ca. 18 mm, die auf beiden Seiten mit Fasergewebe Unifilo^{®} 450 der Firma Owens Corning umhüllt wurde. Der erhaltene Polyurethanklebstoff wurde im Walzenauftragsverfahren bei einer Walzentemperatur von 75 °C in einer Menge von jeweils 330 g/m² jeweils auf die Ober- und Unterseite des Preform-Sandwich aufgetragen. Die Oberfläche des Roh-Sandwichelements wurde dann mit ca. 100 g/m² einer 10 Gew.-%-igen Natriumcarbonatlösung besprüht. Das Roh-Sandwichelement wurde anschließend in einer Form mit einer Formtemperatur von 120 °C auf eine Dicke 1 von 11 mm und eine Dicke 2 von 2 mm verpresst und nach 60 Sekunden entformt. Es wurde ein perfektes Bauteil erhalten. Das erhaltene Polyurethan-Sandwich-Formteil zeigte eine sehr gute Anbindung der Verstärkungsfaserschicht an die Pappwabe, wobei nur ein geringer Anteil des Polyurethanklebstoffs in das Innere der Pappwabe eingedrungen war, was einen geringen Verlust an Polyurethanklebstoff bedeutet. Die Kantenausbildung im Grenzbereich 11mm / 2 mm war hervorragend, ebenso die mechanischen Eigenschaften des erhaltenen Polyurethan-Sandwich-Formteils.

Bsp. 3:
Der Versuch wurde wiederholt, wobei bei ansonsten identischen Bedingungen anstelle des Glasfasergewebes Unifilo^{®} 450 ein Kohlefasergewebe und ein Naturfaser-Jute-Gewebe eingesetzt wurden. In auch in diesem Fall wurde ein Polyurethan-Sandwich-Formteil mit einer sehr guten Anbindung der Verstärkungsfaserschicht an die Pappwabe erhalten, wobei nur ein geringer Anteil des Polyurethanklebstoffs in die Pappwabe eingedrungen war Die Kantenausbildung im Grenzbereich 11mm / 2 mm und die mechanischen Eigenschaften des erhaltenen Polyurethan-Sandwich-Formteile waren ebenfalls hervorragend.

## Patentansprüche

1. Verfahren zur Herstellung von Polyurethan-Sandwich-Formteilen, enthaltend mindestens eine Kernschicht und mindestens eine Verstärkungsfaserschicht, wobei man
i. mindestens eine Verstärkungsfaserschicht auf eine Kernschicht aufbringt und einen feuchtigkeitshärtenden Polyurethanklebstoff auf die Verstärkungsfaserschicht aufträgt,
ii. das Teil aus i. in eine Form gibt und in der Form verpresst und den feuchtigkeitshärtenden Polyurethanklebstoff aushärtet und
iii. das Formteil aus ii. aus der Form entnimmt und gegebenenfalls nacharbeitet, wobei der feuchtigkeitshärtende Polyurethanklebstoff eine Viskosität von 5.000 mPas bis 50.000 mPas, gemessen bei 25 °C nach DIN 53 018, aufweist,
zu mindestens 80 Gew.-%, bezogen auf das Gesamtgewicht des feuchtigkeitshärtenden Polyurethanklebstoffs, isocyanatterminiertes Prepolymer enthält, das durch Vermischen eines stöchiometrischen Überschusses von aromatischem Isocyanat mit polymeren Verbindungen mit mindestens zwei gegenüber Isocyanaten reaktiven Gruppen und gegebenenfalls Verbindungen mit nur einem gegenüber Isocyanaten reaktiven Gruppe sowie gegebenenfalls Kettenverlängerungs- und / oder Vernetzungsmittel erhältlich ist und
der feuchtigkeitshärtende Polyurethanklebstoff vor oder nach dem Aufbringen der Verstärkungsfaserschicht auf die mindestens eine Kernschicht aufgebracht wird und der feuchtigkeitshärtende Polyurethanklebstoff zum Aushärten mit Wasser oder mit einer Wasser enthaltenden Lösung in Kontakt gebracht wird.

2. Verfahren nach Anspruch 1, **dadurch gekennzeichnet, dass** als Material für die Kernschicht Papier-, Metall-, oder Kunststoffwaben, eingesetzt werden

3. Verfahren nach Anspruch 1 oder 2, **dadurch gekennzeichnet, dass** das isocyanatterminierte Prepolymer einen NCO-Gehalt von 5 bis 20 Gew.-% aufweist.

4. Verfahren nach einem der Ansprüche 1 bis 3, **dadurch gekennzeichnet, dass** das aromatische Isocyanat Isocyanate enthält, ausgewählt aus der Gruppe, bestehend aus 2,4'-MDi, 4,4'-MDI, höherkernigen Homologen des MDI oder Mischungen aus zwei oder mehreren dieser Komponenten.

5. Verfahren nach einem der Ansprüche 1 bis 4, **dadurch gekennzeichnet, dass** die polymeren Verbindungen mit mindestens zwei gegenüber Isocyanaten reaktiven Gruppen mindestens ein Polyetherol enthält, erhältlich durch Alkoxylierung eines Startermoleküls mit einer Funktionalität von 2 bis 4 und einem mittleren Gehalt an Ethylenoxid, bezogen auf das Gesamtgewicht an Alkylenoxid, von 20 bis 70 Gew.-%.

6. Verfahren nach einem der Ansprüche 1 bis 5, **dadurch gekennzeichnet, dass** der Polyurethanklebstoff in einer Menge von 200 bis 2000 g/m² Verstärkungsfaserschicht eingesetzt wird.

7. Verfahren nach einem der Ansprüche 1 bis 6, **dadurch gekennzeichnet, dass** der feuchtigkeitshärtende Polyurethanklebstoff vor Aufbringen der Verstärkungsfaserschicht auf die Kernschicht einseitig oder beidseitig auf die Verstärkungsfaserschicht aufgebracht wird.

8. Verfahren nach Anspruch 7, **dadurch gekennzeichnet, dass** der die Auftragung des feuchtigkeitshärtenden Polyurethanklebstoffs auf die Verstärkungsfaserschicht durch Walzenauftrag erfolgt.

9. Verfahren nach Anspruch 7 oder 8, **dadurch gekennzeichnet, dass** die Polyurethanklebstoff enthaltende Verstärkungsfaserschicht eine Stunde bis 3 Monate nach dem Auftragen des Polyurethanklebstoffs auf die Kernschicht aufgebracht wird.

10. Verfahren nach einem der Ansprüche 1 bis 9, **dadurch gekennzeichnet, dass** der feuchtigkeitshärtende Polyurethanklebstoff zum Aushärten mit einer alkalischen, wässrigen Alkalimetall-Lösung in Kontakt gebracht wird.

11. Verfahren nach Anspruch 10, **dadurch gekennzeichnet, dass** die Konzentration der alkalischen, wässrigen Alkalimetall-Lösung 0,1 bis 10 molar, bezogen auf das Alkalimetall ist.

12. Verfahren nach Anspruch 10 oder 11, **dadurch gekennzeichnet, dass** der pH-Wert der wässrigen, alkalischen Alkalimetall-Lösung mindestens 10 ist.

13. Verfahren nach einem der Ansprüche 10 bis 12, **dadurch gekennzeichnet, dass** die alkalischen, wässrigen Alkalimetall-Lösung in einer Menge von 10 bis 150 g/m² auf den Polyurethanklebstoff aufgetragen wird.

14. Verfahren nach einem der Ansprüche 1 bis 13, **dadurch gekennzeichnet, dass** die Form in Schritt (ii.) ein Dekorelement enthält.

15. Verfahren nach einem der Ansprüche 1 bis 14, **dadurch gekennzeichnet, dass** die Verstärkungsfaserschicht eine Glasfaserschicht oder eine Kohlefaserschicht ist.

## Claims

1. A process for producing polyurethane sandwich moldings comprising at least one core layer and at least one reinforcing fiber layer, wherein
i. at least one reinforcing fiber layer is applied onto a core layer and a moisture-curing polyurethane adhesive is applied to the reinforcing fiber layer,
ii. the part from i. is placed into a mold and pressed in the mold and the moisture-curing polyurethane adhesive is cured, and
iii.the molding from ii. is removed from the mold and optionally subjected to further operations,
wherein the moisture-curing polyurethane adhesive has a viscosity of 5000 mPas to 50 000 mPas, measured at 25°C according to DIN 53 018,
comprises at least 80% by weight, based on the total weight of the moisture-curing polyurethane adhesive, of isocyanate-terminated prepolymer which is obtainable by mixing a stoichiometric excess of aromatic isocyanate with polymeric compounds having at least two isocyanate-reactive groups and optionally compounds having only one isocyanate-reactive group and optionally chain extenders and/or crosslinking agents and
the moisture-curing polyurethane adhesive is applied before or after application of the reinforcing fiber layer onto the at least one core layer and for the curing the moisture-curing polyurethane adhesive is brought into contact with water or with a solution comprising water.

2. The process according to claim 1, wherein the material used for the core layer is paper honeycombs, metal honeycombs or plastics honeycombs.

3. The process according to claim 1 or 2, wherein the isocyanate-terminated prepolymer has an NCO content of 5% to 20% by weight.

4. The process according to any of claims 1 to 3, wherein the aromatic isocyanate comprises isocyanates selected from the group consisting of 2,4'-MDI, 4,4'-MDI, higher polycyclic homologs of MDI or mixtures of two or more of these components.

5. The process according to any of claims 1 to 4, wherein the polymeric compounds having at least two isocyanate-reactive groups comprise at least one polyetherol obtainable by alkoxylation of a starter molecule having a functionality of 2 to 4 and an average content of ethylene oxide, based on the total weight of alkylene oxide, of 20% to 70% by weight.

6. The process according to any of claims 1 to 5, wherein the polyurethane adhesive is used in an amount of 200 to 2000 g/m² of reinforcing fiber layer.

7. The process according to any of claims 1 to 6, wherein the moisture-curing polyurethane adhesive is applied to the reinforcing fiber layer on one side or on both sides before application of the reinforcing fiber layer onto the core layer.

8. The process according to claim 7, wherein the moisture-curing polyurethane adhesive is applied to the reinforcing fiber layer by roll application.

9. The process according to claim 7 or 8, wherein the reinforcing fiber layer comprising polyurethane adhesive is applied onto the core layer one hour to 3 months after application of the polyurethane adhesive.

10. The process according to any of claims 1 to 9, wherein the moisture-curing polyurethane adhesive is brought into contact with an alkaline, aqueous alkali metal solution for the curing.

11. The process according to claim 10, wherein the concentration of the alkaline, aqueous alkali metal solution is 0.1 to 10 M, based on the alkali metal.

12. The process according to claim 10 or 11, wherein the pH of the aqueous, alkaline alkali metal solution is at least 10.

13. The process according to any of claims 10 to 12, wherein the alkaline, aqueous alkali metal solution is applied to the polyurethane adhesive in an amount of 10 to 150 g/m².

14. The process according to any of claims 1 to 13, wherein the mold in step (ii.) comprises a decorative element.

15. The process according to any of claims 1 to 14, wherein the reinforcing fiber layer is a glass fiber layer or a carbon fiber layer.

## Revendications

1. Procédé pour la préparation de pièces moulées de polyuréthane-sandwich, contenant au moins une couche noyau et au moins une couche de fibres de renforcement, dans lequel
i. on applique au moins une couche de fibres de renforcement sur une couche noyau et on dépose un adhésif de polyuréthane durcissant à l'humidité sur la couche de fibres de renforcement,
ii. on place la pièce de i. dans un moule et on la comprime dans le moule et on durcit l'adhésif de polyuréthane durcissant à l'humidité et
iii. on retire la pièce moulée de ii. du moule et on la retravaille éventuellement,
l'adhésif de polyuréthane durcissant à l'humidité présentant une viscosité de 5 000 mPas à 50 000 mPas, mesurée à 25 °C selon la norme DIN 53018, contenant au moins 80 % en poids, par rapport au poids total de l'adhésif de polyuréthane durcissant à l'humidité, de prépolymère terminé par isocyanate, qui peut être obtenu en mélangeant un excès stoechiométrique d'isocyanate aromatique avec des composés polymériques comportant au moins deux groupes réactifs envers des isocyanates et éventuellement des composés comportant seulement un groupe réactif envers des isocyanates ainsi qu'éventuellement des agents d'extension de chaînes et/ou des agents de réticulation et
l'adhésif de polyuréthane durcissant à l'humidité étant déposé avant ou après l'application de la couche de fibres de renforcement sur l'au moins une couche noyau et l'adhésif de polyuréthane durcissant à l'humidité étant mis en contact, pour le durcissement, avec de l'eau ou avec une solution contenant de l'eau.

2. Procédé selon la revendication 1, **caractérisé en ce que** du papier alvéolaire, du métal alvéolaire ou du plastique alvéolaire est utilisé en tant que matériau pour la couche noyau.

3. Procédé selon la revendication 1 ou 2, **caractérisé en ce que** le prépolymère terminé par isocyanate présente une teneur en NCO de 5 à 20 % en poids.

4. Procédé selon l'une quelconque des revendications 1 à 3, **caractérisé en ce que** l'isocyanate aromatique contient des isocyanates choisis dans le groupe constitué par le 2,4'-MDI, le 4,4'-MDI, des homologues polycycliques supérieurs du MDI et des mélanges de deux ou plusieurs de ces composants.

5. Procédé selon l'une quelconque des revendications 1 à 4, **caractérisé en ce que** les composés polymériques comportant au moins deux groupes réactifs envers des isocyanates contiennent au moins un polyétherol, qui peut être obtenu par alcoxylation d'une molécule de départ dotée d'une fonctionnalité de 2 à 4 et d'une teneur moyenne en oxyde d'éthylène, par rapport au poids total d'oxyde d'alkylène, de 20 à 70 % en poids.

6. Procédé selon l'une quelconque des revendications 1 à 5, **caractérisé en ce que** l'adhésif de polyuréthane est utilisé en une quantité de 200 à 2 000 g/m² de couche de fibres de renforcement.

7. Procédé selon l'une quelconque des revendications 1 à 6, **caractérisé en ce que** l'adhésif de polyuréthane durcissant à l'humidité est appliqué sur un côté ou sur les deux côtés de la couche de fibres de renforcement avant l'application de la couche de fibres de renforcement sur la couche noyau.

8. Procédé selon la revendication 7, **caractérisé en ce que** l'application de l'adhésif de polyuréthane durcissant à l'humidité sur la couche de fibres de renforcement est réalisée par enduction au rouleau.

9. Procédé selon la revendication 7 ou 8, **caractérisé en ce que** la couche de fibres de renforcement contenant l'adhésif de polyuréthane est appliquée une heure à 3 mois après l'application de l'adhésif de polyuréthane sur la couche noyau.

10. Procédé selon l'une quelconque des revendications 1 à 9, **caractérisé en ce que** l'adhésif de polyuréthane durcissant à l'humidité est, pour le durcissement, mis en contact avec une solution de métal alcalin aqueuse, alcaline.

11. Procédé selon la revendication 10, **caractérisé en ce que** la concentration de la solution de métal alcalin aqueuse, alcaline est de 0,1 à 10 molaires, par rapport au métal alcalin.

12. Procédé selon la revendication 10 ou 11, **caractérisé en ce que** la valeur de pH de la solution de métal alcalin, aqueuse, alcaline est d'au moins 10.

13. Procédé selon l'une quelconque des revendications 10 à 12, **caractérisé en ce que** la solution de métal alcalin aqueuse, alcaline est appliquée sur l'adhésif de polyuréthane en une quantité de 10 à 150 g/m².

14. Procédé selon l'une quelconque des revendications 1 à 13, **caractérisé en ce que** le moule dans l'étape (ii.) contient un élément décoratif.

15. Procédé selon l'une quelconque des revendications 1 à 14, **caractérisé en ce que** la couche de fibres de renforcement est une couche de fibres de verre ou une couche de fibres de carbone.
